# EUROPEAN PATENT SPECIFICATION

(11) **EP 2 802 796 B1**
(45) Date of publication and mention of the grant of the patent: **12.10.2016**
(21) Application number: 12700477.8
(22) Date of filing: 13.01.2012
(51) Int. Cl.: F16J 15/3296, G01D 5/353

(54) **BEARING SEAL WITH INTEGRATED SENSOR**
LAGERDICHTUNG MIT INTEGRIERTEM SENSOR
JOINT DE ROULEMENT À CAPTEUR INTÉGRÉ

(43) Date of publication of application: 19.11.2014
(73) Proprietor: Aktiebolaget SKF, 415 50 Göteborg (SE)
(72) Inventor: YANG, Hongyu, NL-3439 MTT Nieuwegein (NL)
(74) Representative: Kuhstrebe, Jochen
(86) International application number: PCT/EP2012/050507
(87) International publication number: WO 2013/104426

(56) References cited:
- EP-A1- 2 242 004
- US-A- 5 359 405
- US-A1- 2009 087 303
- US-A1- 2011 240 747
- US-B1- 7 280 219

## Description

### Field of the invention

This invention relates to a bearing seal with an integrated sensor for monitoring seal and/or bearing conditions, the bearing seal at least partly being made of an injection molded elastomer material. The invention further relates to a bearing unit with such a bearing seal and a method of producing such a bearing seal.

### Background of the invention

In US patent application 2002/0051593 A1, a bearing assembly is disclosed having a seal with a temperature sensor secured to the seal for monitoring the temperature in the bearing assembly. In said US patent application, a thermistor (i.e. a resistor whose resistance varies significantly with temperature) is used as the temperature sensor. The seal is secured to the stationary bearing ring and comprises an elastic member made of rubber or resin. A molding technique may be used to allow the temperature sensor to be fixedly encapsulated by the elastic member. In the only disclosed embodiment wherein the temperature sensor is in direct contact with the elastic member, the sensor is pre-fitted to a metal core, before a molding process integrates the elastic member with the metal core of the seal. The direct contact between the sensor and the metal ensures a quick and efficient conduction of the temperature to the sensor.

The bearing assembly of said US patent application has several disadvantages. Although the metal casing protects the sensor electronics from damage caused by friction with moving parts and avoids direct contact with lubricant oil, over time lubrication oil or other dirt may end up in between the rubber and the metal coil. This will damage the sensor and interfere with its operation. Additionally, the sensor can only be integrated in seals having such a metal casing, which may not be desirable in certain applications. Another problem is that the sensor electronics are not really able to withstand the high temperatures that may arise in bearing environments.

Furthermore, US 7,280,219 discloses a bearing seal with an integrated sensor for monitoring seal and/or bearing conditions, the integrated sensor comprising an optical fiber with at least one light distorting structure, susceptible to external influences, the optical fiber being integrated in the material of the bearing seal, wherein at least part of the optical fiber is provided at an external surface of the bearing seal and wherein the optical fiber comprises an outer coating.

### Object of the invention

It is an object of the invention to provide a bearing seal with an integrated sensor that does not show the above mentioned disadvantages.

### Summary of the invention

According to a first aspect of the invention, this object is achieved by providing a bearing seal with an integrated sensor for monitoring seal and/or bearing conditions in accordance with claim 1*.* The bearing seal at least partly being made of an injection molded elastomer material, the integrated sensor comprising an optical fiber with at least one light distorting structure, susceptible to external influences, the optical fiber being integrated in the elastomer material during the injection molding process.

The light distorting structure may be embodied as an interruption of the optical fiber, separating the optical fiber into a first part and a second part. The interruption should be provided such that light leaving the first part at a start of the interruption can enter the second part at an end of the interruption. Suitably, the optical fiber is integrated within the elastomer material such that at the location of the interruption, the optical fiber is provided at an external surface of the seal. The exact light propagating properties of the interruption then depend on the medium in between the two parts of the optical fiber. For example, the presence or absence of grease or lubricant oil or possible contamination of such substances may influence the wavelength spectrum, intensity and/or polarity of the transmitted light. Also changes in the physical dimensions of the interruption, e.g., due to temperature changes or mechanical stress may influence the transmission properties. With a light source and an optical sensor coupled to the optical fiber, this change of transmission and reflection properties can easily be detected. The detected change in optical properties is a measure for, e.g., variations in strain, pressure or temperature.

Alternatively, the light distorting structure may comprise a fiber Bragg grating. A fiber Bragg grating is a type of distributed Bragg reflector constructed in a short segment of optical fiber that reflects particular wavelengths of light and transmits all others. This selective reflectance is obtained by adding a periodic variation to the refractive index of the fiber core, which generates a wavelength specific dielectric mirror. A fiber Bragg grating can therefore be used as an inline optical filter to block certain wavelengths, or as a wavelength-specific reflector.

When subject to external forces, e.g. caused by local strain, pressure or changes in temperature, the fiber core, i.e. the part with the fiber Bragg grating, is deformed. Typically, the fiber Bragg grating is shortened or elongated which causes the periodic variation of the refractive index at the fiber Bragg grating to change. The changed shape of the fiber Bragg grating gives it different transmission and reflection properties. With a light source and an optical sensor coupled to the optical fiber, this change of transmission and reflection properties can easily be detected. The detected change in optical properties is a measure for, e.g., variations in strain, pressure or temperature.

It is to be noted that, apart from fiber interruptions and fiber Bragg gratings, also other light distorting structures may be used. For achieving the objects of the invention, it is only important that the light distorting structure is susceptible to external influences such as variations in temperature, strain, pressure or the composition of substances in contact with the light distorting structure.

Because the optical fiber is integrated with the elastomer material of the seal during the injection molding process, and no electronic components are required in or at the seal itself, the bearing seal according to the invention does not show the drawbacks of the above described prior art bearing seals with integrated sensors. The elastomer material of the seal protects the optical fiber and the light distorting structures against unintended contact with lubricant or other substances. Wear and tear of the elastomer material of the seal will not cause the sensor to become detached from its surface and no metal casing is required for integrating the sensor into the seal.

If an outer coating of the optical fiber comprises a polymer material, preferably the same material as the elastomer material of the seal itself, the integration of the optical fiber in the elastomer material of the seal is optimal. When the seal is deformed, e.g. due to applied pressure, aging or changes in temperature, the optical fiber and the light distorting structures in the optical fiber will de deformed correspondingly, thereby enabling optimally accurate monitoring of the seal and or bearing conditions.

In order to be able to measure different aspects of the seal and bearing conditions and environment, to improve accuracy of the measurements, and to enable monitoring different parts of the seal, multiple light distorting structures may be provided on one or more separate optical fibers. When one optical fiber comprises multiple light distorting structures, they should be arranged to reflect light of different wavelengths in order to enable the optical sensor to detect which one has been affected by the changing conditions. This can easily be obtained by providing different fiber Bragg gratings with different patterns of variation of the refractive index. Different fiber Bragg gratings may work around different central wavelengths. Alternatively, different Bragg gratings are comprised in different optical fibers in order to enable detecting which one of the fiber Bragg gratings has been changing shape. The different optical fibers are preferably easy to tell apart, e.g. by providing them with differently colored fiber coatings or different fiber connectors.

As mentioned, at least part of the optical fiber may be provided at an external surface of the bearing seal for monitoring the bearing lubricant. For monitoring the lubricant it is not necessary to use a fiber Bragg grating or fiber interruption. The presence of the lubricant at the exposed surface of the optical fiber already affects the optical properties of the optical fiber. The measured change in optical properties is then used for monitoring important parameters like the amount or the constituents of the lubricant. Alternatively, the exposed part of the fiber may contain a Fiber Bragg grating, whereby the exposed part further has a coating that changes dimension in the presence of specific chemical substances at the surface of the seal. The coatings used for this purpose should be selected such that they shrink or swell when in contact with the specific chemical substance to be detected. When the fiber Bragg grating is deformed together with the coating, this can be detected by the optical sensor at the end of the optical fiber. In one example, the exposed part is located at an air side of the seal, and the coating is adapted to deform in the presence of oil, meaning that the optical fiber may be used to detect leakage. In a further example, the exposed part is located at an oil side of the seal and the coating is adapted to deform in the presence of water, meaning that water contamination may be detected. According to the invention the outer coating is adapted to deform in the presence of oil or in the presence of water.

According to a second aspect of the invention a bearing unit is provided which comprises a bearing seal as described above, a light source, an optical sensor and an electronic circuit. The light source and the optical sensor are provided for being optically coupled to respective ends of the optical fiber. The electronic circuit is provided for being electronically coupled to the light source and the optical sensor for processing measured signals from the optical sensor to enable monitoring seal and/or bearing conditions.

According to a third aspect of the invention, a method of producing a bearing seal with an integrated sensor for monitoring seal and/or bearing conditions in accordance with claim 11 is provided. The method comprises steps of providing an optical fiber with at least one light distorting structure, susceptible to external influences, and of using an injection molding process for producing at least part of the bearing seal from an elastomer material, the optical fiber being integrated in the elastomer material during the injection molding process.

These and other aspects of the invention are apparent from and will be elucidated with reference to the embodiments described hereinafter.

### Brief description of the drawings

In the drawings:
- Figure 1: shows a cross section of a bearing seal according to the invention,
- Figure 2: shows a cross section of a different bearing seal according to the invention,
- Figure 3: schematically shows the integrated sensor and further means needed for monitoring the seal and/or bearing conditions,
- Figure 4: shows a cutaway drawing of an optical fiber for use in the bearing seals of figures 1 and 2,
- Figure 5: shows a refractive index of an optical fiber with a coated fiber Bragg grating,
- Figure 6a: shows a power distribution of an input light beam,
- Figure 6b: shows a spectral response for an optical fiber with a fiber Bragg grating,
- Figure 6c: shows a power distribution of light reflected by a fiber Bragg grating at, e.g., three different temperatures,
- Figures 7a-7c: schematically show a fiber Bragg grating at, e.g., three different temperatures, and
- Figure 8: shows a flow diagram of a method for producing the bearing seal according to the invention.

### Detailed description of the invention

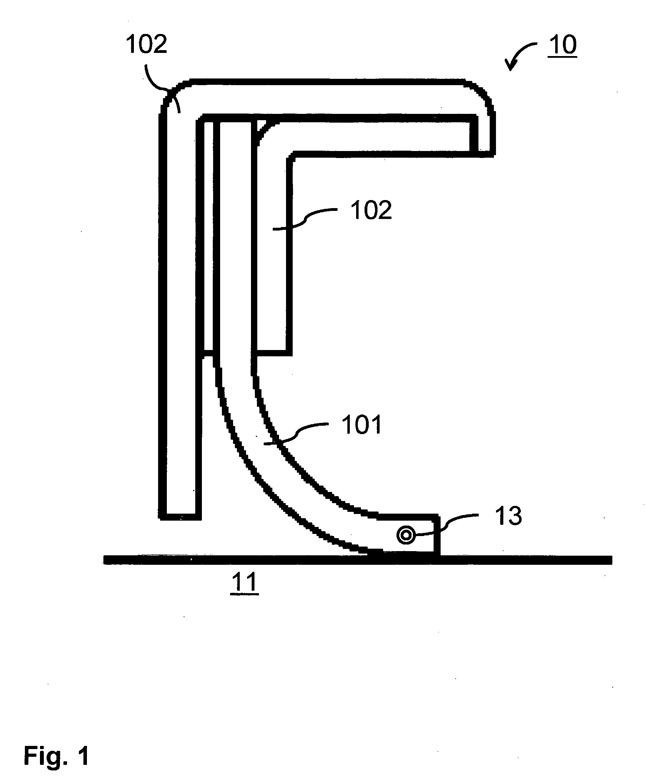

Figure 1 shows a cross section of a bearing seal 10 according to the invention. The seal 10 is typically ring shaped and may be mounted between e.g. a bearing housing (not shown) and a cylindrical shaft 11 that is supported by the bearing. The seal in this example comprises a flexible part of elastomer material 101 which is bonded to a metal reinforcement case 102 of, e.g., steel or aluminum. During molding of the flexible part 101, an optical fiber 13 with at least one light distorting structure has been integrated in the elastomer material 101. As will be elucidated below, this optical fiber 13 serves for monitoring seal and/or bearing conditions or environmental parameters such as temperature and the presence and/or constituents of lubricant oil. Although this exemplary bearing seal 10 only comprises one optical fiber 13, additional optical fibers may be applied for enabling monitoring additional parameters and/or for more accurately measuring single parameters.

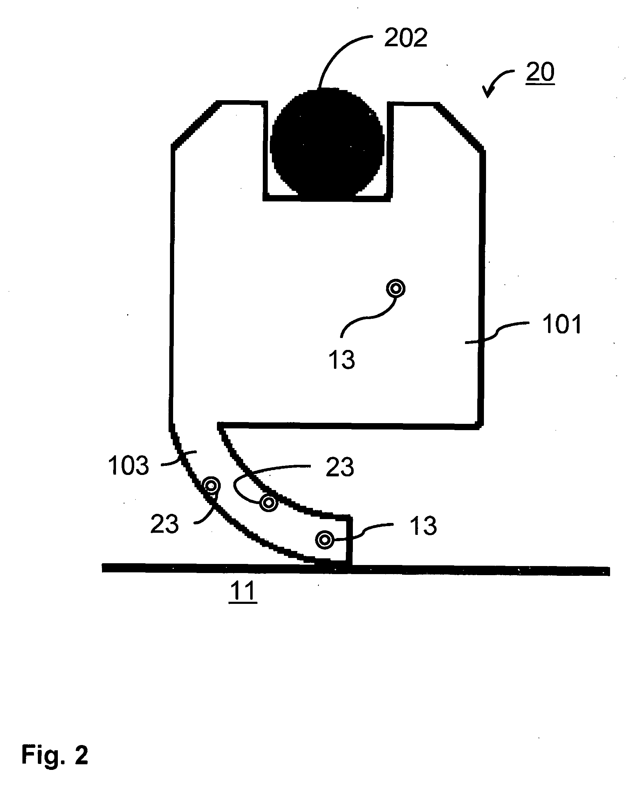

Figure 2 shows a cross section of a different bearing seal 20 according to the invention. This bearing seal 20 is also ring shaped and mounted on a cylindrical shaft 11 of the bearing unit. This bearing seal 20 mainly consists of an elastomer material 101 and is only reinforced by an O-shaped ring of, e.g., steel or aluminum. A flexible sealing lip 103 of the elastomer material makes contact with the shaft. Optical fibers 13, 23 are integrated within the elastomer material 101. Three optical fibers 13, 23 are provided in the sealing lip 103 and one in the seal body. The optical fiber 13 in the seal lip 103 may be configured for measuring lip force. The optical fiber 13 in the seal body may be configured for measuring temperature.

Two of the optical fibers 23 in the sealing lip 103 are provided at the surface thereof in order to monitor the presence and condition of a lubricant. For example, one of optical fibers 23 is used for monitoring lubricant conditions at an oil side of the seal, while the other optical fiber 23 is provided for detecting when leakage of the seal causes lubricant to appear at the air side of the seal. For monitoring lubricant it is not necessary to use a fiber Bragg grating or fiber interruption. The presence of the lubricant at the exposed surface of the optical fiber already affects the optical properties of the optical fiber 23. The measured change in optical properties is then used for monitoring important parameters like the amount or the constituents of the lubricant. Alternatively, the optical fiber comprises an Bragg grating and further has a specially selected coating for detecting the presence of specific chemical substances at the surface of the seal 20. The coatings used for this purpose should be selected such that they shrink or swell when in contact with the specific chemical substance to be detected. When the fiber Bragg grating is deformed together with the coating, this can be detected by the optical sensor at the end of the optical fiber.

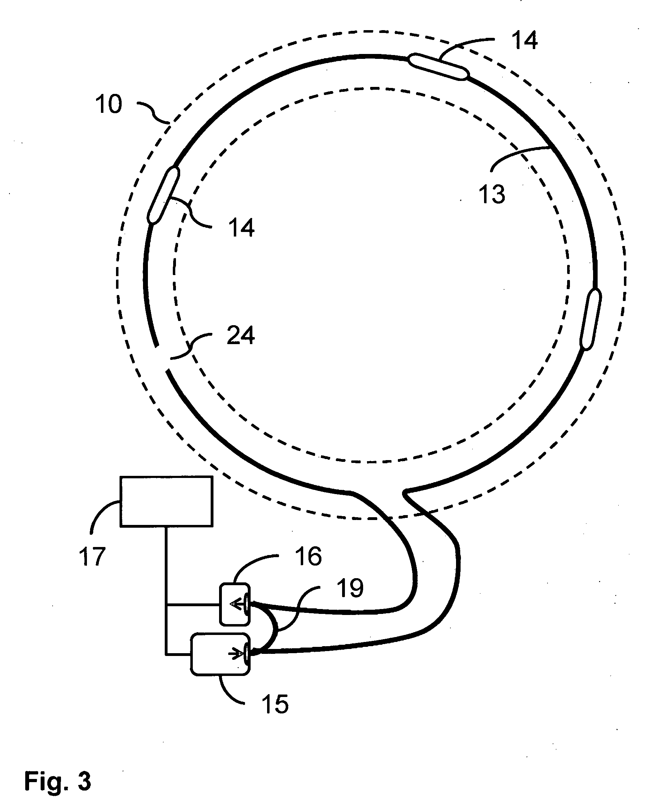

Figure 3 schematically shows the integrated sensor and further means needed for monitoring the seal 10, 20 and/or bearing conditions. As already explained above with reference to figures 1 and 2, the seal 10 comprises at least one optical fiber 13 with one or more fiber Bragg gratings 14 and/or a fiber interruption 24. The fiber Bragg gratings 14 may be created by engraving variations of refractive index into the core of the fiber 13. Fiber Bragg gratings reflect particular wavelengths of light and transmit all others. Which particular wavelengths are reflected depends on the pattern that is engraved in the fiber 13 core. A light source 15 and a light sensor 16 are optically coupled to respective ends of the optical fiber 13. The light source 15, e.g. a laser diode, sends monochromatic or polychromatic light into the optical fiber 13. The light sensor 16 detects the light that is transmitted through the optical fiber. Multiple light sources 15 and/or light sensors 16 may be used for separately sending out or detecting light of different colors. If the fiber Bragg gratings 14 reflect part of the light sent through the fiber 13, the spectrum of the detected light differs from the spectrum of the emitted light. Analysis of the detected light may thus provide information about the presence of fiber Bragg gratings 14 in the fiber 13. Optionally, a reference fiber 19 may be provided for directly leading part of the emitted light to the light sensor 16 and for enabling direct measurement of the light that enters the optical fibers 13, 19.

The optical fiber 13 may also comprise an interruption 24, separating the optical fiber 13 into a first part and a second part. The interruption 24 should be provided such that light leaving the first part at a start of the interruption can enter the second part at an end of the interruption. The exact light propagating properties of the interruption 24 depend on the medium in between the two parts of the optical fiber. For example, the presence or absence of grease or lubricant oil or possible contamination of such substances by e.g. wear debris may influence the wavelength spectrum, intensity and/or polarity of the transmitted light. Also changes in the physical dimensions of the interruption 24, e.g., due to temperature changes or mechanical stress may influence the transmission properties.

The optical properties of the light distorting structures 14, 24 are influenced by the conditions that are being monitored. The changes in optical properties are detected by the light sensor 16. The light sensor 16 is coupled to an electronic control circuit 17 for processing the results of the measurements made. The electronic circuit 17 may, e.g., provide warning signals or adjust operational parameters when needed. The electronic circuit 17 is also coupled to the light source 15 for controlling what light is sent into the optical fiber 13. If multiple optical fibers 13 are provided, also multiple light sources 15 and/or light sensors 16 may be used. Alternatively, multiple optical fibers 13 are coupled to one light source 15 and one light sensor 16. The light source 15, optical sensor 16, electronic circuit and/or the reference fiber 19 may all be integrated into the seal 10 itself. However, these elements are preferably provided at a static part of the bearing unit in such a way that they can easily be coupled to the optical fibers 13 of the bearing seal 10. This brings the advantage that a replacement seal only needs to comprise the optical fiber 13 with the light distorting structures 14, 24 and not all the other elements.

In practice there will be a trade-off when selecting either mono-chromatic or polychromatic light. Using mono-chromatic light, the light has to be modulated to reach the sensitivity band of all sensors. As a consequence, the sensors are addressed sequentially which is a disadvantage for precisely determining angle in a rotating system, but is expected to have an advantage in circuit complexity and therefore in cost. The polychromatic variant does allow parallel read-out, but also requires parallel circuits for each of the Bragg gratings 14. As a consequence higher speeds can be obtained, but the cost may go up.

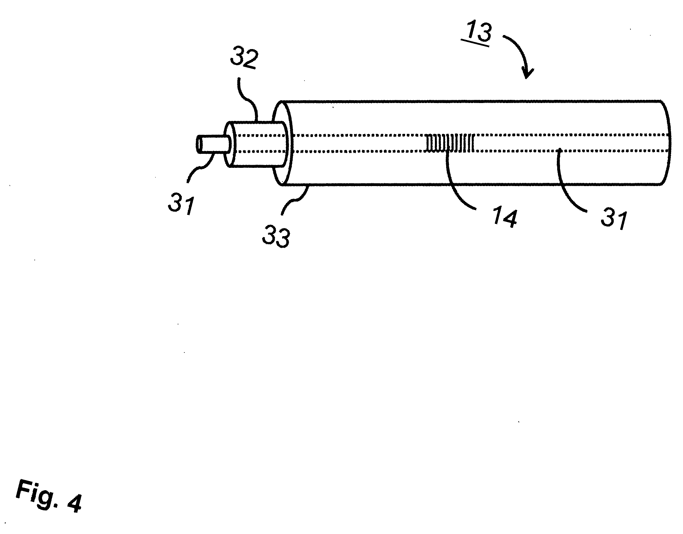

Figure 4 shows a cutaway drawing of an optical fiber 13 for use in the bearing seals 10, 20 of figures 1 and 2. The optical fiber 13 comprises a transparent fiber core 31 which is usually made of glass. The fiber core 31 transmits the light coming from the light source 15. The fiber core 31 is surrounded by a transparent cladding material 32 with a lower index of refraction than the fiber core 31. The function of the cladding material 32 is to keep the light inside the fiber 13 by total internal reflection. Around the cladding material 32, at least one protective coating 33 is provided. The protective coating 33 protects the inner core 31 and the cladding 32 against, e.g., moisture, shock or mechanical damage. The coating material 33 is preferably made of epoxy or other polymers that are easily molded into the elastomer material 101 of the bearing seal 10, 20. For optimal integration of the optical fiber 13 into the bearing seal 10, 20, the fiber coating 33 may even be made of the same elastomer material 101 as used for the seal 10, 20. However, also glass fibers with silica coatings may be molded into a polymer seal 10, 20. The optical fiber 13 comprises at least one fiber Bragg grating 14. Fiber Bragg gratings 14 may be created by engraving variations of refractive index into the core 31 of the fiber 13.

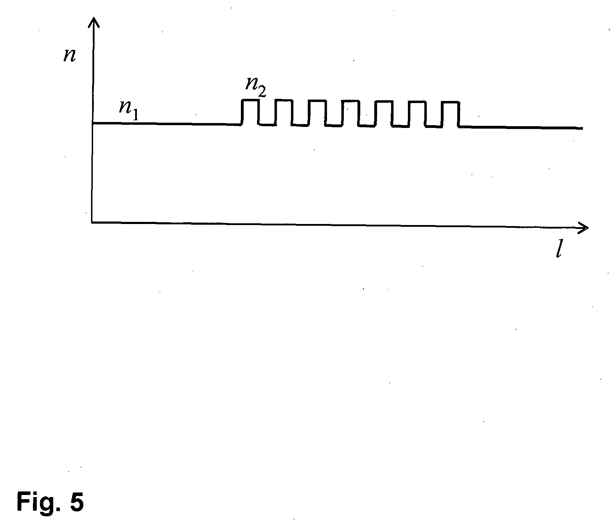

Figure 5 shows a refractive index of an optical fiber 13 with a coated fiber Bragg grating 14. Fiber Bragg gratings 14 are obtained by adding a systematic variation to the refractive index, *n*, of the fiber core. The optical properties of the fiber Bragg grating 14 depend on the difference between the refractive indices (*n*₂-*n*₁), the distance between the index transitions and the number of transitions.

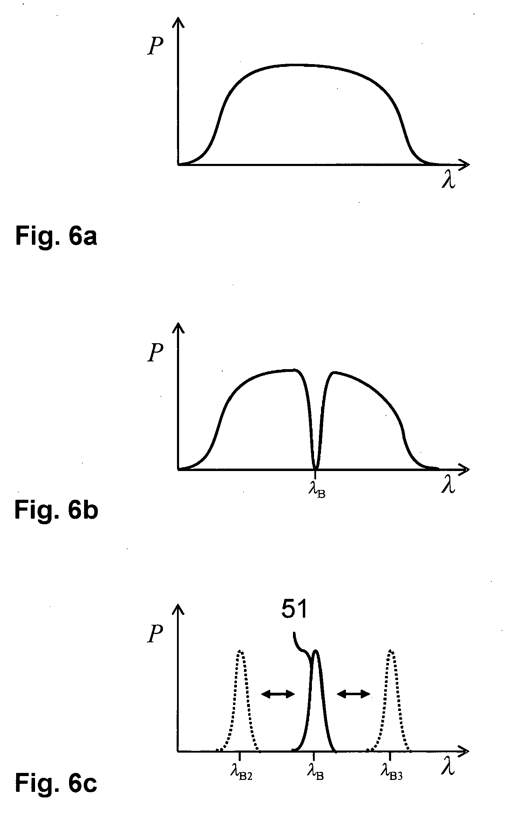

Figure 6a shows a power distribution of an input light beam. The input light beam used in the bearing seal 10 according to the invention may either be monochromatic or polychromatic. In practice, it is not possible to produce light with only one wavelength and the term monochromatic light is used for light with a narrow frequency bandwidth. Polychromatic light is light with a number of different wavelengths. Polychromatic light may be a combination of monochromatic light of two or more different colors or just some mixture of light in a broad frequency range, such as for example white light. Figure 6a shows a frequency spectrum of a polychromatic input light beam that may be used in a bearing seal according to the invention.

Figure 6b shows a spectral response for an optical fiber 13 with a fiber Bragg grating 14. It shows the power distribution of the light transmitted through the optical fiber 13 and the fiber Bragg grating 14 as detected by the light sensor. Most frequencies of the light beam of figure 6a are transmitted and detected. Only light in a narrow frequency range around the reflection wavelength, λ_{B}, is reflected by the fiber Bragg grating 14 and does not reach the light sensor.

Figure 6c shows a power distribution 51 of light reflected by a fiber Bragg grating 14 at, e.g., three different temperatures. At a first temperature, the fiber Bragg grating 14 provides a transmission profile as shown in figure 6b, with a dip at the reflection wavelength, *λ*_{B}, of the grating 14. Figure 6c shows the power distribution 51 of the light reflected by the grating 14, with a peak at the reflection wavelength, *λ*_{B}. When the fiber Bragg grating is deformed, e.g. due to changing temperatures or applied strain or pressure, the pattern of variations in the refractive index of the grating 14 is changed. As a result, the reflection wavelength, *λ*_{B}, of the grating 14 is shifted to, a lower wavelength, *λ*_{B2}, or a higher wavelength, *λ*_{B3}. This shift in of the reflection wavelength is measured by the light sensor and converted into information about, e.g., temperature, strain or pressure by the electronic circuit. By adding special coatings which are more susceptible for changing shape in response to a change in specific monitored conditions, the effect of parameter changes on the optical properties of the optical fiber 13 may be enhanced.

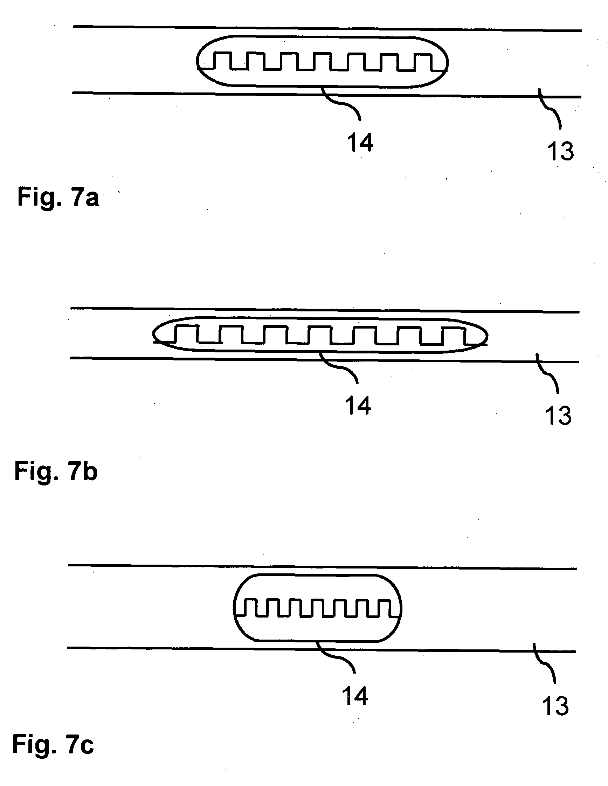

Figures 7a-7c schematically show a fiber Bragg grating 14 in three different shapes. In the three different figures 7a, 7b and 7c, e.g., temperature, strain or pressure have caused the grating 14 to have different shapes. The elongation and shortening of the grating 14 also changes the distance between two consecutive refractive index transitions, which changes the reflection wavelength of the fiber Bragg grating 14.

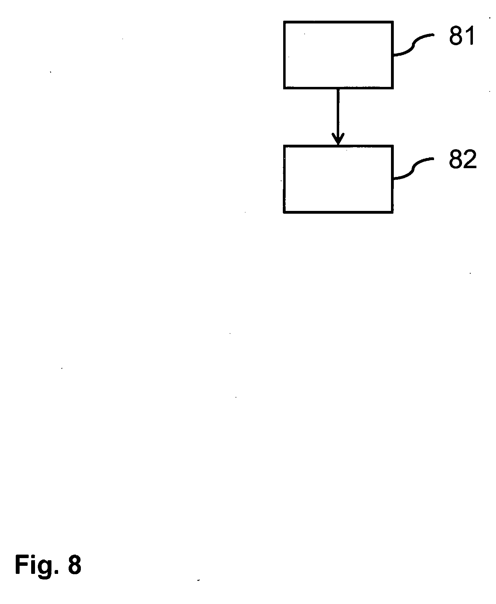

Figure 8 shows a flow diagram of a method for producing the bearing seal 10, 20 according to the invention. The production method comprises at least two steps. In a first step 81, the optical fiber 13 with the at least one fiber Bragg grating 14 or interruption 24 is provided. Then, in injection molding step 82, the elastomer part 101 of the bearing seal 10, 20 is produced by injection molding. During this injection molding step, the optical fiber 13 is integrated with the elastomer material 101 of the seal 10, 20.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A bearing seal (10, 20) with an integrated sensor for monitoring seal and/or bearing conditions, the bearing seal (10, 20) at least partly being made of an injection molded elastomer material (101), the integrated sensor comprising an optical fiber (13) with at least one light distorting structure (14, 24), susceptible to external influences, the optical fiber (13) being integrated in the elastomer material (101) during the injection molding process, wherein at least part of the optical fiber (13) is provided at an external surface of the bearing seal (10, 20) and wherein the optical fiber (13, 23) comprises an outer coating made of a material that deforms in contact with a specific chemical substance or substances, the outer coating being adapted to deform in the presence of oil or the outer coating being adapted to deform in the presence of water.

2. A bearing seal (10, 20) as claimed in claim 1, wherein the light distorting structure is a fiber Bragg grating (14).

3. A bearing seal (10, 20) as claimed in claim 1, wherein the light distorting structure is an interruption (24) of the optical fiber, separating the optical fiber (13) into a first part and a second part, the interruption (24) being provided such that light leaving the first part at a start of the interruption can enter the second part at an end of the interruption (24).

4. A bearing seal (10, 20) as claimed in claim 1, wherein the optical fiber (13) comprises an outer coating (33) of a polymer material.

5. A bearing seal (10, 20) as claimed in claim 4, wherein the outer coating (33) of the optical fiber (13) is made of the elastomer material (101) of the bearing seal.

6. A bearing seal (10, 20) as claimed in claim 2, wherein the at least one fiber Bragg grating (14) is provided for measuring strain, pressure and/or temperature.

7. A bearing seal (10, 20) as claimed in claim 2, comprising at least two fiber Bragg gratings (14).

8. A bearing seal (10, 20) as claimed in claim 7, wherein the at least two fiber Bragg gratings (14) are arranged to reflect light of at least two distinct wavelengths.

9. A bearing seal (10, 20) as claimed in claim 7, comprising at least two optical fibers (13) and wherein the at least two fiber Bragg gratings (14) are comprised in respective ones of the at least two optical fibers (13).

10. A bearing unit comprising:
- a bearing seal (10, 20) as claimed in any one of the preceding claims,
- a light source (15) and an optical sensor (16) for being optically coupled to respective ends of the optical fiber (13), and
- an electronic circuit (17) being electronically coupled to the light source (15) and the optical sensor (16) for processing measured signals from the optical sensor (16) to enable monitoring seal and/or bearing conditions.

11. A method of producing a bearing seal (10, 20) with an integrated sensor for monitoring seal and/or bearing conditions, the method comprising the steps of:
- providing an optical fiber (13) with at least one fiber light distorting structure (14, 24), susceptible to external influences, and of
- using an injection molding process for producing at least part of the bearing seal (10, 20) from an elastomer material (101), the optical fiber (13) being integrated in the elastomer material (101) during the injection molding process,
wherein at least part of the optical fiber (13) is provided at an external surface of the bearing seal (10,20) and wherein the optical fiber (13, 23) comprises an outer coating made of a material that deforms in contact with a specific chemical substance or substances, the outer coating being adapted to deform in the presence of oil or the outer coating being adapted to deform in the presence of water.

## Patentansprüche

1. Lagerdichtung (10, 20) mit einem integrierten Sensor zum Überwachen von Dichtungs- und/oder Lagerzuständen, wobei die Lagerdichtung (10, 20) zumindest teilweise aus einem spritzgegossenen Elastomermaterial (101) besteht, wobei der integrierte Sensor eine optische Faser (13) mit wenigstens einer lichtverzerrenden Struktur (14, 24), die für äußere Einflüsse empfindlich ist, umfasst, wobei die optische Faser (13) während des Spritzgießprozesses in das Elastomermaterial (101) integriert wird, wobei zumindest ein Teil der optischen Faser (13) an einer Außenfläche der Lagerdichtung (10, 20) bereitgestellt ist und wobei die optische Faser (13, 23) eine äußere Beschichtung umfasst, die aus einem Material besteht, das sich in Kontakt mit einer spezifischen chemischen Substanz oder mit spezifischen chemischen Substanzen verformt, wobei die äußere Beschichtung dafür eingerichtet ist, sich bei Vorhandensein von Öl zu verformen, oder die äußere Beschichtung dafür eingerichtet ist, sich bei Vorhandensein von Wasser zu verformen.

2. Lagerdichtung (10, 20) nach Anspruch 1, wobei die lichtverzerrende Struktur ein Faser-Bragg-Gitter (14) ist.

3. Lagerdichtung (10, 20) nach Anspruch 1, wobei die lichtverzerrende Struktur eine Unterbrechung (24) der optischen Faser ist, welche die optische Faser (13) in einen ersten Teil und einen zweiten Teil unterteilt, wobei die Unterbrechung (24) so bereitgestellt ist, dass Licht, welches den ersten Teil an einem Anfang der Unterbrechung verlässt, an einem Ende der Unterbrechung (24) in den zweiten Teil eintreten kann.

4. Lagerdichtung (10, 20) nach Anspruch 1, wobei die optische Faser (13) eine äußere Beschichtung (33) aus einem Polymermaterial umfasst.

5. Lagerdichtung (10, 20) nach Anspruch 4, wobei die äußere Beschichtung (33) der optischen Faser (13) aus dem Elastomermaterial (101) der Lagerdichtung besteht.

6. Lagerdichtung (10, 20) nach Anspruch 2, wobei das wenigstens eine Faser-Bragg-Gitter (14) zum Messen von Spannungen, Druck und/oder der Temperatur bereitgestellt ist.

7. Lagerdichtung (10, 20) nach Anspruch 2, welche wenigstens zwei Faser-Bragg-Gitter (14) umfasst.

8. Lagerdichtung (10, 20) nach Anspruch 7, wobei die wenigstens zwei Faser-Bragg-Gitter (14) dafür eingerichtet sind, Licht mit wenigstens zwei verschiedenen Wellenlängen zu reflektieren.

9. Lagerdichtung (10, 20) nach Anspruch 7, welche wenigstens zwei optische Fasern (13) umfasst, und wobei die wenigstens zwei Faser-Bragg-Gitter (14) in jeweilige der wenigstens zwei optischen Fasern (13) aufgenommen sind.

10. Lagereinheit, welche Folgendes umfasst:
- eine Lagerdichtung (10, 20) nach einem der vorhergehenden Ansprüche,
- eine Lichtquelle (15) und einen optischen Sensor (16), die mit jeweiligen Enden der optischen Faser (13) optisch zu koppeln sind, und
- eine elektronische Schaltung (17), die elektronisch mit der Lichtquelle (15) und dem optischen Sensor (16) gekoppelt ist, um gemessene Signale vom optischen Sensor (16) zu verarbeiten, um das Überwachen von Dichtungs- und/oder Lagerzuständen zu ermöglichen.

11. Verfahren zur Herstellung einer Lagerdichtung (10, 20) mit einem integrierten Sensor zum Überwachen von Dichtungs- und/oder Lagerzuständen, wobei das Verfahren die folgenden Schritte umfasst:
- Versehen einer optischen Faser (13) mit wenigstens einer lichtverzerrenden Faserstruktur (14, 24), die für äußere Einflüsse empfindlich ist, und
- Verwenden eines Spritzgießprozesses zur Herstellung zumindest eines Teils der Lagerdichtung (10, 20) aus einem Elastomermaterial (101), wobei die optische Faser (13) während des Spritzgießprozesses in das Elastomermaterial (101) integriert wird, wobei zumindest ein Teil der optischen Faser (13) an einer Außenfläche der Lagerdichtung (10, 20) bereitgestellt ist und wobei die optische Faser (13, 23) eine äußere Beschichtung umfasst, die aus einem Material besteht, das sich in Kontakt mit einer spezifischen chemischen Substanz oder mit spezifischen chemischen Substanzen verformt, wobei die äußere Beschichtung dafür eingerichtet ist, sich bei Vorhandensein von Öl zu verformen, oder die äußere Beschichtung dafür eingerichtet ist, sich bei Vorhandensein von Wasser zu verformen.

## Revendications

1. Joint de roulement (10, 20) avec un capteur intégré pour surveiller l'état du joint et/ou du roulement, le joint de roulement (10, 20) étant au moins partiellement constitué d'un matériau élastomère moulé par injection (101), le capteur intégré comprenant une fibre optique (13) avec au moins une structure déformant la lumière (14, 24) sensible aux influences externes, la fibre optique (13) étant intégrée dans le matériau élastomère (101) pendant le procédé de moulage par injection, au moins une partie de la fibre optique (13) étant disposée au niveau d'une surface externe du joint de roulement (10, 20) et la fibre optique (13, 23) comprenant un revêtement extérieur constitué d'un matériau qui se déforme au contact d'une substance ou de substances chimiques spécifiques, le revêtement extérieur étant adapté pour se déformer en présence d'huile ou le revêtement extérieur étant adapté pour se déformer en présence d'eau.

2. Joint de roulement (10, 20) selon la revendication 1, dans lequel la structure déformant la lumière est un réseau de Bragg sur fibre (14).

3. Joint de roulement (10, 20) selon la revendication 1, dans lequel la structure déformant la lumière est une interruption (24) de la fibre optique, séparant la fibre optique (13) en une première partie et une deuxième partie, l'interruption (24) étant disposée de telle sorte que la lumière quittant la première partie à un début de l'interruption peut entrer dans la deuxième partie à une fin de l'interruption (24).

4. Joint de roulement (10, 20) selon la revendication 1, dans lequel la fibre optique (13) comprend un revêtement extérieur (33) d'un matériau polymère.

5. Joint de roulement (10, 20) selon la revendication 4, dans lequel le revêtement extérieur (33) de la fibre optique (13) est constitué du matériau élastomère (101) du joint de roulement.

6. Joint de roulement (10, 20) selon la revendication 2, dans lequel l'au moins un réseau de Bragg sur fibre (14) est disposé pour mesurer une déformation, une pression et/ou une température.

7. Joint de roulement (10, 20) selon la revendication 2, comprenant au moins deux réseaux de Bragg sur fibre (14).

8. Joint de roulement (10, 20) selon la revendication 7, dans lequel les au moins deux réseaux de Bragg sur fibre (14) sont agencés pour réfléchir la lumière d'au moins deux longueurs d'onde distinctes.

9. Joint de roulement (10, 20) selon la revendication 7, comprenant au moins deux fibres optiques (13) et dans lequel les au moins deux réseaux de Bragg sur fibre (14) sont contenus dans des fibres respectives parmi les au moins deux fibres optiques (13).

10. Unité de roulement comprenant :
- un joint de roulement (10, 20) selon l'une quelconque des revendications précédentes,
- une source de lumière (15) et un capteur optique (16) destinés à être couplés optiquement à des extrémités respectives de la fibre optique (13), et
- un circuit électronique (17) couplé électroniquement à la source de lumière (15) et au capteur optique (16) pour traiter des signaux mesurés provenant du capteur optique (16) afin de permettre la surveillance de l'état du joint et/ou du roulement.

11. Procédé de production d'un joint de roulement (10, 20) avec un capteur intégré pour surveiller l'état du joint et/ou du roulement, le procédé comprenant les étapes consistant à :
- se procurer une fibre optique (13) avec au moins une structure déformant la lumière (14, 24) sensible aux influences externes, et à
- utiliser un procédé de moulage par injection pour produire au moins une partie du joint de roulement (10, 20) à partir d'un matériau élastomère (101), la fibre optique (13) étant intégrée dans le matériau élastomère (101) pendant le procédé de moulage par injection, au moins une partie de la fibre optique (13) étant disposée au niveau d'une surface externe du joint de roulement (10, 20) et la fibre optique (13, 23) comprenant un revêtement extérieur constitué d'un matériau qui se déforme au contact d'une substance ou de substances chimiques spécifiques, le revêtement extérieur étant adapté pour se déformer en présence d'huile ou le revêtement extérieur étant adapté pour se déformer en présence d'eau.
